# EUROPÄISCHE PATENTSCHRIFT

(11) **EP 1 180 207 B1**
(45) Veröffentlichungstag und Bekanntmachung des Hinweises auf die Patenterteilung: **08.09.2004**
(21) Anmeldenummer: 00920652.5
(22) Anmeldetag: 01.04.2000
(51) Int. Cl.: F02B 69/00

(54) **VERFAHREN ZUM BETRIEB EINER IM VIERTAKT ARBEITENDEN HUBKOLBEN-BRENNKRAFTMASCHINE MIT WECHSELNDER KOMPRESSIONS- UND FREMDZÜNDUNG**
METHOD FOR OPERATING A FOUR-STROKE RECIPROCATING INTERNAL COMBUSTION ENGINE WITH ALTERNATING COMPRESSION IGNITION AND EXTERNALLY SUPPLIED IGNITION
PROCEDE DE FONCTIONNEMENT D'UN MOTEUR A COMBUSTION INTERNE A PISTON ALTERNATIF A QUATRE TEMPS AVEC ALLUMAGE ALTERNATIVEMENT PAR COMPRESSION ET PAR APPAREILLAGE EXTERNE

(30) Priorität: 21.05.1999 DE 19923413
(43) Veröffentlichungstag der Anmeldung: 20.02.2002
(73) Patentinhaber: DaimlerChrysler AG, 70567 Stuttgart (DE)
(72) Erfinder: JURETZKA, Andreas, D-70372 Stuttgart (DE); NIEBERDING, Rolf-Günther, D-80331 München (DE)
(86) Internationale Anmeldenummer: PCT/EP2000/002936
(87) Internationale Veröffentlichungsnummer: WO 2000/071875

(56) Entgegenhaltungen:
- WO-A-98/07973
- DE-A- 2 851 504
- DE-A- 19 519 663
- DE-A- 19 818 596

## Beschreibung

Die Erfindung betrifft ein Verfahren zum Betrieb einer im Viertakt arbeitenden Hubkolben-Brennkraftmaschine mit wechselnder Kompressions- und Fremdzündung der im Oberbegriff des Anspruchs 1 genannten Gattung.

Als Hubkolben-Brennkraftmaschine wird eine Maschine verstanden, die in einer Anzahl veränderlicher Volumina Gemische aus Luft und Kraftstoff verbrennt und die freigesetzte thermische Energie über den entstehenden Gasdruck in den Volumina in mechanische Energie umsetzt. Die Gemische werden durch Direkteinspritzung des Kraftstoffs innerhalb der als Brennräume fungierenden Volumina gebildet.

Die Verbrennung wird zumindest im Leerlauf und/oder bei Teillast durch Kompressionszündung eingeleitet. Diese bietet bei teilhomogenen, mageren Gemischen ein gutes Potential, Luft/Kraftstoffgemische bei gutem wirkungsgrad und bei extrem geringer Stickoxidbildung zu verbrennen. Die Kompressionszündung kann bei motorisch üblichen Verdichtungen nur mit Abgasrückhaltung und Abgasaktivierung betrieben werden. Dabei bedeutet Abgasaktivierung eine Aktivierungseinspritzung von Kraftstoff in heißes, komprimiertes und sauerstoffhaltiges Abgas. Eine solche Zündung und Verbrennung kann nur in einem schmalen Teillast-Kennfeldbereich stabil verwirklicht werden. Für höhere Motorlasten ist eine ottomotorische Zündung und Verbrennung erforderlich.

Der instationäre Betrieb eines Verbrennungsmotors erfordert eine schnelle Regelbarkeit der Motorlast und einen schnellen Übergang zwischen den beiden Betriebsarten. Der direkte, wechselseitige Übergang zwischen der ottomotorischen Zündung und der Verbrennung energiereicher stöchiometrischer Gemische und der Kompressionszündung magerer Gemische stellt eine starke Änderung der thermischen und gasdynamischen Zustände im Motor dar.

Die Kompressionszündung erfolgt über eine Temperaturerhöhung des Luft/Kraftstoffgemisches. Die Temperaturerhöhung des Frischgemisches wird durch Mischen mit den Abgasanteilen des vorhergehenden Zyklus und durch die sich anschließende geometrische Kompression des abgeschlossenen, maximalen Ausgangsvolumens auf ein minimales Restvolumen bewirkt. In dem verbleibenden komprimierten Restvolumen stellt sich eine Gastemperatur ein, die das Gemisch zur Entzündung bringt. Der Verbrennungsprozeß, der sich an die Kompressionszündung homogener, magerer Gemische anschließt, ist aufgrund der freigesetzten Energie ein selbsterhaltender bzw. selbstverstärkender Prozeß. Die Einleitung und Regelung dieser Verbrennung kann durch variable Verdichtung mittels variierbarem Einlaßschluß oder über variierbare Abgasrückhaltung mit Aktivierungseinspritzung erfolgen. Eine klopffreie Laststeigerung kann über Verdampfungskühlung durch spät eingespritzten Kraftstoff verwirklicht werden.

Die Verbrennung des teilhomogenen Luft/Kraftstoffgemisches ist abhängig vom Anteil der Brennraummasse an rückgehaltenem Abgas mit dem Luftüberschuß aus dem vorangegangenen Zyklus und der zugeführten Frischluft sowie dem direkt in den Brennraum eingebrachten Kraftstoff. Die jeweilige Zusammensetzung des Gemisches beeinflußt den Beginn und damit den Verlauf der Energiefreisetzung. Ein hoher Anteil rückgehaltenen Abgases beeinflußt die Energiefreisetzung des nachfolgenden Zyklus. Eine Vorsteuerung der Verbrennung ist durch die gezielte Einspritzung im Rahmen der Aktivierung möglich.

Dazu wird der Kraftstoff in das im Brennraum rückgehaltene Abgas eingespritzt, wodurch eine vorwiegend endotherme Vorreaktion des zugeführten Kraftstoffs mittels Abgaswärme und heißer Restluft herbeigeführt wird, die die nachfolgend komprimierte; vollständige. Ladung bei der Einleitung der exothermen Reaktion beeinflußt.

Die WO 98/07973 offenbart eine Brennkraftmaschine, die durch Kompressions- und Fremdzündung betrieben werden kann. Dabei wird beschrieben, wie im Allgemeinen die Brennverläufe bei Kompressionszündung zu erfassen bzw. zu beeinflussen sind. Durch verschiedene Steuerungsvorrichtungen werden während der Verbrennung nachfolgende Brennabläufe geregelt. Dafür sind Regelungs- und Steuerelemente vorgesehen, die das Verdichtungsverhältnis sowie die verschiedenen Gemischeigenschaften lastabhängig verändern. Des Weiteren weist die in WO 98/07973 offenbarte Brennkraftmaschine ein Steuerungssystem zur Erfassung der Verbrennungsverläufen, sowie zur Erkennung der Motorbetriebszustände wie Verbrennungsanfang und Verbrennungsdauer auf, um entsprechende Motorbetriebszustandssignale zu erzeugen. Die Verbrennung der offenbarten Brennkraftmaschine erfolgt bei niedriger und mittlerer Last durch Kompressionszündung und bei hoher Last durch Fremdzündung. Es ist vorgesehen, durch entsprechende Steuersignale Temperatur-, Druck-, Luftverhältnis-, Gemischselbstzündungssteuervorrichtung zu regeln, um die nachfolgenden Verbrennungsabläufe zu bestimmen.

In der nicht vorveröffentlichten Patentanmeldung 198 18 596.0 ist ein gattungsgemäßer Verbrennungsmotor beschrieben, in dem das für die motorische Realisation der Kompressionszündung angestrebte mechanische Konzept dargestellt ist. Die notwendige Abgasrückhaltung wird durch eine mechanische Vorsteuerung einer binär umschaltbaren Nockenwelle verwirklicht, deren umgeschaltete Nockenform zu verkürzten Ventilsteuerzeiten (Ventilunterschneidung) und damit zur Kompression des rückgehaltenen Abgases führt. Die Menge des Abgases wird über eine Abgasstauklappe, die nach den Auslaßorganen angeordnet ist, gesteuert. Diese regelt über den Staudruck und die daraus resultierende Druckdifferenz zum Brennraum die rückgehaltene Abgasmenge.

Weiterhin sind eine Aktivierungseinspritzung in das rückgehaltene Abgas und eine Fremdzündung für den Vollastbetrieb mit stöchiometrischem Gemisch vorgesehen.

Stöchiometrische Gemische werden bei Ventilsteuerzeiten ohne Abgasrückhaltung ottomotorisch gezündet und verbrannt. Die Lastregelung findet dabei über eine Drosselung des stöchiometrischen Gemischmassenstroms statt. Bei der Verbrennung eines stöchiometrischen Gemisches weist das Abgas eine hohe Temperatur auf. Der Wirkungsgrad des Motors mit Drosselregelung leidet unter den drosselinduzierten Verlusten.

Der Übergangsbereich zwischen Kompressions- und Fremdzündung ist der mittlere Lastbereich mit Drosselregelung. Bei ottomotorischem Betrieb wird die Motorlast über die Gemischmenge mit der Einlaßdrosselklappe gesteuert, bei Kompressionszündung über die Abgasmenge mit der Abgasstauklappe, da diese die rückgehaltene Abgasmenge und damit die ansaugbare Menge der Frischladung bestimmt.

Die ottomotorische Verbrennung toleriert einen nur eingeschränkten Abgasanteil im Luft/Kraftstoffgemisch. Ein ottomotorischer Betrieb bei der Nockenwellenstellung für Abgasrückhaltung ist nicht möglich. Andererseits ist ein Betrieb mit Kompressionszündung magerer Gemische bei ottomotorischer Verdichtung ohne Abgasrückhaltung ebenfalls nicht möglich. Die vorgesehene Abgasstauklappe kann in diesem Fall allein nicht ausreichend Abgas entsprechender Temperatur und Aktivierung bereitstellen.

Der Erfindung liegt die Aufgabe zugrunde, für einen gattungsgemäßen Verbrennungsmotor ein Verfahren zum ruckfreien, wechselseitigen Übergang zwischen Kompressions- und Fremdzündung anzugeben.

Die Aufgabe wird durch ein Verfahren mit den Merkmalen des Anspruchs 1 gelöst.

Der Übergang zwischen den beiden Betriebsarten erfordert die Umstellung der Nockenform und damit der Nockenwelle. Die Lage der Nockenwelle wird bei laufendem Verbrennungsmotor geändert. Dies geschieht optimalerweise während eines einzigen Kompressions- und Expansionstaktes, d.h. wenn die Nocken nicht im Eingriff stehen. Dann ist die Umstellung von Kompressions- auf Fremdzündung besonders einfach zu bewerkstelligen.

Nach der Umstellung wird in die Frischladung, die zunächst noch ungedrosselt angesaugt wird, die stöchiometrische Kraftstoffmenge eingespritzt und das Gemisch anschließend fremdgezündet. Aufgrund des ungedrosselten, stöchiometrischen Gemisches ergibt sich eine energiereiche, hohe Füllung, die im Vergleich zum Betrieb mit Kompressionszündung magerer Gemische zu einer erheblich höheren Motorlast führt. Diese kann während des durch Drosseln absinkenden Drucks im Saugrohr mittels eines kontinuierlich angepaßten Zündwinkels momentengleich ausgeglichen werden.

Eine Möglichkeit, den Wechsel von Kompressions- zu Fremdzündung mit höherem wirkungsgrad zu verwirklichen, ergibt sich durch die Rückführung von Abgas. Während der Abgasstaudruck durch Öffnen der Abgasstauklappe sinkt, wird ein Abgasrückführventil geöffnet, das den in Strömungsrichtung hinter der Drosselklappe liegenden Ansaugbereich mit dem vor der Abgasstauklappe liegenden Abgasbereich verbindet. Auf diese Weise wird bei sinkendem Überdruck Abgas in den noch entdrosselten Saugtakt gefördert. Dann wird die Drosselklappe so weit geschlossen, daß durch den Differenzdruck zwischen Abgas- und Saugrohr die für eine wirkungsgradoptimale, ottomotorische Verbrennung erforderliche Abgasmenge gefördert wird. Auch in diesem Fall wird die Motorlast durch den Zündwinkel momentengleich geregelt.

Falls der Wechsel von Kompressions- zu Fremdzündung sich über mehrere Arbeitszyklen erstreckt, wird die Kraftstoffzufuhr bis zum vollzogenen Wechsel unterbrochen. Danach erfolgt ein konventioneller Start mit Fremdzündung. Ein kurzer, gesteuerter Lastimpuls vor oder nach dem Wechsel kompensiert den Leistungsausfall durch die ungefeuerten Arbeitszyklen. Die Massenträgheit des Antriebsstrangs verhindert dabei spürbare Drehzahländerungen.

Beim Übergang von ottomotorischer Zündung auf Kompressionszündung ist das ottomotorische Abgas für einen längeren Betrieb mit einfacher Abgasstauklappe zu heiß. Eine temperaturfeste Ausführung derselben ist sehr aufwendig. Aufgrund der hohen Abgastemperatur der vorausgegangenen stöchiometrischen Verbrennung wird für die Reaktionseinleitung der ersten Kompressionszündungen eine geringere Abgasrückhaltung benötigt. Durch die niedrigere Verbrennungstemperatur bei Kompressionszündung magerer Gemische sinkt die mittlere Temperatur im Brennraum, wodurch die thermische Belastung der Abgasstauklappe abnimmt und die erforderliche Abgasrückhaltung bis zum stabilen Betriebszustand der Kompressionszündung wieder ansteigt.

Für einen Wechsel der Zündverfahren bei geringerer Abgastemperatur wird eine Kombination der Eigenschaften beider Zündverfahren angestrebt. Der Übergang zwischen beiden Zündverfahren wird durch eine ottomotorische Verbrennung mit hoher Abgasrückführung vorbereitet. Abgasrückführung bedeutet, daß Abgas aus dem Brennraum durch ein Auslaßorgan aus- und durch ein Einlaßorgan wieder einströmt. Dabei sinkt die Abgastemperatur im allgemeinen erheblich. Für eine Verwirklichung beider Zündverfahren in einem Brennraum sind in der motorischen Konstruktion innere Gemischbildung und Fremdzündung erforderlich. Die innere Gemischbildung ermöglicht eine ottomotorische Zündung und Verbrennung bei höherer Abgasrückführung. Die Abgasrückführung erhöht den Massenstrom durch den Brennraum, senkt die Abgastemperatur und die Stickoxidbildung bei mittlerer Last und bietet einen einfacheren Übergang zur Kompressionszündung. Die dann folgende Entdrosselung der Ansaugseite und die Absenkung der mittleren Prozeßtemperatur erhöhen den motorischen Wirkungsgrad.

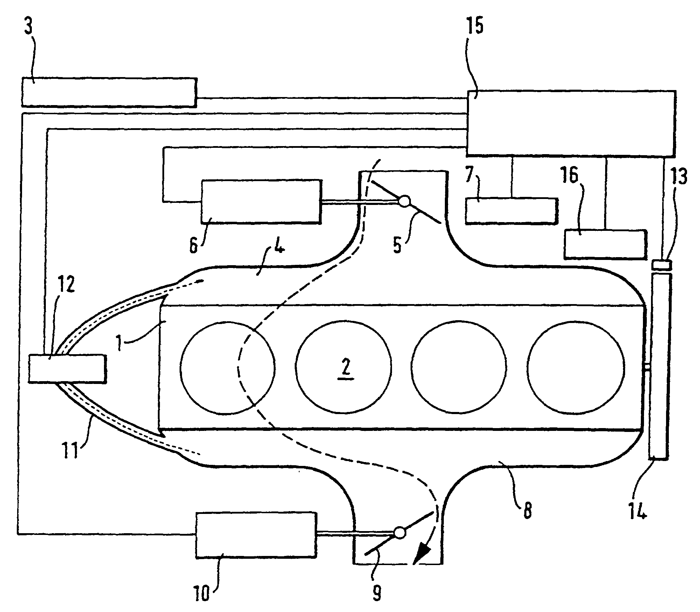

Weitere Merkmale der Erfindung ergeben sich aus den Patentansprüchen und der folgenden Beschreibung. Ein Ausführungsbeispiel der Erfindung ist in der nachfolgenden Beschreibung anhand der einzigen Zeichnungsfigur, die ein Schema eines Verbrennungsmotors mit vier Brennräumen, einer Drosselklappe, einer Abgasstauklappe und einem Abgasrückführventil zeigt, näher erläutert.

Gemäß dieser Darstellung ist ein im Viertakt arbeitender Verbrennungsmotor gezeigt, mit einem Zylinderblock 1, in dem vier Brennräume 2 angeordnet sind. Der Gaswechsel geschieht über nicht dargestellte Ein- und Auslaßorgane, die durch eine nicht dargestellte Nockenwelle angetrieben werden. Diese ist mittels eines Umschalters 3 zwischen der Nockenform für Ventilüberschneidung (ottomotorischer Betrieb) und der Nockenform für Abgasrückhaltung (Kompressionszündungsbetrieb) umschaltbar.

Die Frischladung wird durch eine Ansaugleitung 4 angesaugt, in der eine für alle Brennräume 2 wirksame Drosselklappe 5 angeordnet ist, die von einem Drosselklappensteller 6 betätigt wird.

Der Kraftstoff (im Regelfall Benzin) wird durch nicht dargestellte Einpritzventile, die von einem Einspritzgerät 7 betätigt werden, mit hohem Druck in die Brennräume 2 eingespritzt. Das Abgas wird in einer Abgasleitung 8 gesammelt, in der eine für alle Brennräume 2 wirksame Abgasstauklappe 9 angeordnet ist. Diese wird von einem Stauklappensteller 10 betätigt.

Zwischen Ansaugleitung 4 und Abgasleitung 8 befindet sich eine Verbindungsleitung 11, in der ein steuerbares Abgasrückführventil 12 angeordnet ist.

Ein Drehzahlmesser 13 greift die Ungleichförmigkeit der Drehbewegung der Kurbelwelle am Umfang eines Schwungrades 14 ab. Ein Rechner 15 steuert unter Auswertung der Drehzahlschwankungen des Schwungrades 14 und von Meßwerten eventuell in den Brennräumen 2 vorhandenen Ionenstromsonden das Einspritzgerät 7, den Umschalter 3, den Drosselklappensteller 6, den Stauklappensteller 10, das Abgasrückführventil 12 und die Zündung 16.

### Das erfindungsgemäße Verfahren funktioniert folgendermaßen:

Der Wechsel zwischen Kompressions- und Fremdzündung wird durch synchrone Betätigung der Drossel- und Abgasstauklappe sowie des Abgasrückführventils 12 (AGR-Ventils) verwirklicht. Das AGR-Ventil 12 beherrscht die Verbindungsleitung 11, die zwischen der Abgasleitung 8 vor der Abgasstauklappe 9 und der Ansaugleitung 4 nach der Drosselklappe 5 angeordnet ist. Bei sinkender Motorlast im zunehmend gedrosselten ottomotorischen Betrieb wird das AGR-Ventil 12 geöffnet. Die Druckdifferenz zwischen Ansaug- und Abgasleitung fördert Abgas in die Frischladung der Ansaugleitung 4. Die Verbrennungstemperatur sinkt und in gleichem Maße wird durch Schließen der Abgasstauklappe 9 die Druckdifferenz und damit die Abgasrückführung erhöht.

Kurz vor der Umstellung der Nockenwelle auf Abgasrückhaltung wird die Drosselklappe 5 geöffnet, um die Druckdifferenz zwischen Abgasleitung 8 und Ansaugleitung 4 zu vermindern, denn bei Kompressionszündung ist eine Abgasrückführung nicht erforderlich. Sie kann aber zur Verhinderung von klopfender Verbrennung bei niedrigen Luft/Kraftstoff-Verhältnissen sinnvoll sein. Normalerweise wird das AGR-Ventil 12 sogleich mit der Umstellung auf Abgasrückhaltung geschlossen.

## Patentansprüche

1. Verfahren zum Betrieb einer im Viertakt arbeitenden Hubkolben-Brennkraftmaschine mit wechselnder Kompressions- und Fremdzündung mit folgenden Merkmalen:
- in mindestens einen Brennraum (2), dessen Volumen sich zyklisch ändert, wird Kraftstoff direkt eingespritzt,
- Frischgas wird durch mindestens ein Einlassorgan und Verbrennungsabgas durch mindestens ein Auslassorgan zu- bzw. abgeführt,
- bei niedriger und mittlerer Teillast wird ein teilhomogenes, mageres Grundgemisch aus Luft, Kraftstoff und zurückgehaltenem Abgas gebildet,
- bei Teillast erfolgt eine Kompressionszündung,
- bei hoher Teillast und Vollast wird ein homogenes, stöchiometrisches Gemisch gebildet,
- bei Vollast erfolgt eine Fremdzündung,
- eine Abgasrückhaltung erfolgt durch schaltbare Ventilunterschneidung und Abgasaufstau,
- es erfolgt eine Aktivierungseinspritzung in das rückgehaltene Abgas,
- ein Signal für den Wechsel der Betriebsart wird aus Parametern der Abgasrückhaltung des Abgasaufstaues, der Drosselung der Frischladung und aus der Größe des Zündwinkels der Fremdzündung sowie der Menge und dem Zeitpunkt der Kraftstoffeinspritzung und außerdem in Abhängigkeit einer Abgasrückführung gebildet, wobei
- der Wechsel zwischen Kompressions- und Fremdzündung durch synchrone Betätigung einer Drosselklappe (5), einer Abgasstauklappe (9) sowie eines Abgasrückführventils (12) erfolgt, und
- das Abgasrückführventil (12) die Verbindungsleitung (11) beherrscht, die zwischen einer Abgasleitung (8) vor der Abgasstauklappe (9) und einer Ansaugleitung (4) nach der Drosselklappe (5) angeordnet ist.

2. Verfahren nach Anspruch 1,
**dadurch gekennzeichnet, dass** der Wechsel zwischen Ventilunterschneidung und Ventilüberschneidung durch Verschieben einer Nockenwelle erfolgt.

3. Verfahren nach Anspruch 1 oder 2,
**dadurch gekennzeichnet, dass** sich der Wechsel der Betriebsart über mehrere Arbeitszyklen erstreckt.

4. Verfahren nach Anspruch 3,
**dadurch gekennzeichnet, dass** die Kraftstoffeinspritzung während des Wechsels abgeschaltet wird und ein Neustart in der geänderten Betriebsart erfolgt.

5. Verfahren nach Anspruch 3 oder 4,
**dadurch gekennzeichnet, dass** ein Drehzahlabfall während des Wechsels durch einen Lastimpuls, vorzugsweise nach dem Wechsel, kompensiert wird.

6. Verfahren nach einem der Ansprüche 1 bis 5,
**dadurch gekennzeichnet, dass** beim Wechsel von Kompressions- zu Fremdzündung nach Verschieben der Nockenwelle auf Ventilüberschneidung ein allmähliches Schließen der Drosselklappe (5) und ein allmähliches Öffnen der Abgasstauklappe (9) sowie des Abgasrückführventils (12) erfolgt.

7. Verfahren nach Anspruch 6,
**dadurch gekennzeichnet, dass** nach erfolgtem Wechsel von Kompressions- zu Fremdzündung die Kraftstoffeinspritzmenge stöchiometrisch und der Zündwinkel drehmomentstabilisierend geregelt werden.

8. Verfahren nach Anspruch 1,
**dadurch gekennzeichnet, dass** beim Wechsel von Fremd- zu Kompressionszündung nach Verschieben einer Nockenwelle auf Ventilunterschneidung ein allmähliches Öffnen der Drosselklappe (5) und ein allmähliches Schließen der Abgasstauklappe (9) erfolgt, während das Abgasrückführventil (12) zumindest bis zum Abschalten der Fremdzündung geöffnet bleibt.

## Claims

1. A process for the operation of a reciprocating internal combustion engine operating on a four stroke cycle with alternating compression ignition and spark ignition having the following features:
- fuel is injected directly into at least one combustion chamber (2) with a cyclically changing volume,
- fresh gas is fed in through at least one intake organ and combustion exhaust gas is discharged through at least one exhaust organ,
- under light and cruise throttle conditions a partially homogenous, lean basic mixture of air, fuel and retained exhaust gas is formed,
- compression ignition takes place under partial throttle conditions,
- under high and full throttle conditions a homogenous, stoichiometric mixture is formed.
- spark ignition takes place under full throttle conditions,
- exhaust gas is retained by means of switchable valve underlap and the banking up of exhaust gas,
- activation injection takes place into the retained exhaust gas,
- a signal for the changeover in operating mode is created from exhaust gas banking-up retention parameters, the throttling of the fresh charge, the size of the ignition angle for spark ignition and the volume and point of fuel injection and in addition dependent on exhaust gas recirculation,
- the changeover between compression and spark ignition being effected by synchronous actuation of a throttle valve (5), an exhaust gas banking-up valve (9) and an exhaust gas recirculating valve (12), and
- the exhaust gas recirculating valve (12) controlling the connecting lien (11) which is positioned between an exhaust gas line (8) prior to the exhaust gas banking-up valve (9) and an intake line (4) after the throttle valve (5).

2. A process in accordance with claim 1,
**characterised in that**
the changeover between valve underlap and valve overlap is effected by changing the position of a cam shaft.

3. A process in accordance with claim 1 or 2,
**characterised in that**
the shift in operating mode extends over several working cycles.

4. A process in accordance with claim 3,
**characterised in that**
the fuel injection function is deactivated during the changeover and reactivated in the new operating mode.

5. A process in accordance with claim 3 or 4,
**characterised in that**
a drop in engine speed during the changeover is compensated for by a load impulse, preferably after the changeover.

6. A process in accordance with one of claims 1 to 5,
**characterised in that**
during the changeover from compression to spark ignition once the position of the cam shaft has been changed to valve overlap, a gradual closing of the throttle valve (5) and a gradual opening of the exhaust gas banking-up valve (9) and the exhaust gas recirculating valve (12) takes place.

7. A process in accordance with claim 6,
**characterised in that**
once the changeover from compression to spark ignition is complete, the fuel injection volume is controlled stoichiometrically and the ignition angle is controlled in such a manner as to stabilise torque.

8. A process in accordance with claim 1,
**characterised in that**
during the changeover from spark to compression ignition once the position of the cam shaft has been changed to valve underlap, a gradual opening of the throttle valve (5) and a gradual closing of the exhaust gas banking-up valve (9) takes place while the exhaust gas recirculating valve (12) remains open at least until the spark ignition function is deactivated.

## Revendications

1. Procédé de fonctionnement d'un moteur à combustion interne à pistons alternatifs à quatre temps avec alternativement allumage par compression et allumage externe, présentant les caractéristiques suivantes :
- du carburant est directement injecté dans au moins une chambre de combustion (2) dont le volume varie cycliquement,
- du gaz frais est amené et évacué à travers au moins un organe d'admission et du gaz de combustion est amené et évacué à travers au moins un organe de sortie,
- un mélange de base pauvre et partiellement homogène est formé à partir d'air, de carburant et de gaz d'échappement retenu en cas de charge partielle faible et moyenne,
- en cas de charge partielle a lieu un allumage par compression,
- en cas de charge partielle élevée et de pleine charge est formé un mélange homogène stoechiométrique,
- en cas de pleine charge a lieu un allumage externe,
- une retenue de gaz d'échappement a lieu par recoupement inférieur de soupape commutable et par accumulation de gaz d'échappement,
- il se produit une injection d'activation dans le gaz d'échappement retenu,
- un signal pour le changement de mode de fonctionnement est formé à partir de paramètres de la retenue de gaz d'échappement de l'accumulation de gaz d'échappement, de l'étranglement du chargement de gaz frais et à partir de la grandeur de l'angle d'allumage de l'allumage externe ainsi que de la quantité et de l'instant de l'injection de carburant et en outre en fonction d'un recyclage de gaz d'échappement,
- le changement entre l'allumage par compression et l'allumage externe ayant lieu par actionnement synchrone d'un clapet d'étranglement (5), d'un clapet d'accumulation de gaz d'échappement (9) ainsi que d'une soupape de recyclage de gaz d'échappement (12), et
- la soupape de recyclage de gaz d'échappement (12) maîtrisant la conduite de raccordement (11) qui est agencée entre une conduite de gaz d'échappement (8) en amont du clapet d'accumulation de gaz d'échappement (9) et une conduite d'aspiration (4) en aval du clapet d'étranglement (5).

2. Procédé selon la revendication 1, **caractérisé en ce que** le changement entre le recoupement inférieur de soupape et le recoupement supérieur de soupape a lieu par déplacement d'un arbre à cames.

3. Procédé selon l'une ou l'autre des revendications 1 et 2, **caractérisé en ce que** le changement du mode de fonctionnement s'étend sur plusieurs cycles de travail.

4. Procédé selon la revendication 3, **caractérisé en ce que** l'injection de carburant est arrêtée pendant le changement, et un nouveau démarrage a lieu dans le mode de fonctionnement modifié.

5. Procédé selon l'une ou l'autre des revendications 3 et 4, **caractérisé en ce qu'**une baisse de régime pendant le changement est compensée par une impulsion de charge, de préférence après le changement.

6. Procédé selon l'une des revendications 1 à 5, **caractérisé en ce que** lors du changement depuis l'allumage par compression vers l'allumage externe et après le déplacement de l'arbre à cames sur le recoupement supérieur de soupape, il se produit une fermeture graduelle du clapet d'étranglement (5) et une ouverture graduelle du clapet d'accumulation de gaz d'échappement (9) ainsi que de la soupape de recyclage de gaz d'échappement (12).

7. Procédé selon la revendication 6, **caractérisé en ce que** le changement une fois effectué depuis l'allumage par compression vers l'allumage externe, la quantité d'injection de carburant est régulée à une valeur stoechiométrique, et l'angle d'allumage est régulé de manière à stabiliser le couple de rotation.

8. Procédé selon la revendication 1, **caractérisé en ce que** lors du changement depuis l'allumage externe vers l'allumage par compression, et après le déplacement de l'arbre à cames sur le recoupement inférieur de soupape, il se produit une ouverture graduelle du clapet d'étranglement (5) et une fermeture graduelle du clapet d'accumulation de gaz d'échappement (9), tandis que la soupape de recyclage de gaz d'échappement (12) reste ouverte au moins jusqu'à la coupure de l'allumage externe.
